# EUROPEAN PATENT SPECIFICATION

(11) **EP 3 771 538 B1**
(45) Date of publication and mention of the grant of the patent: **25.05.2022**
(21) Application number: 19194446.1
(22) Date of filing: 29.08.2019
(51) Int. Cl.: B27N 1/00, B27K 1/00, B27N 3/02, B27N 3/18

(54) **FIRE-PROOF WOODEN PRESSURE BOARD**
FEUERBESTÄNDIGE HOLZDRUCKPLATTE
PLAQUE DE PRESSION EN BOIS IGNIFUGÉE

(30) Priority: 02.08.2019 CN 201910713539
(43) Date of publication of application: 03.02.2021
(73) Proprietor: Zhejiang Yanmu Technology Co., Ltd., Quanxi Town, Wuyi County Jinhua, Zhejiang 321201 (CN)
(72) Inventor: Pan, Dewang, Jinhua,, Zhejiang 321201 (CN)
(74) Representative: IP HILLS NV

(56) References cited:
- JP-A- 2005 042 104
- JP-A- 2015 058 640
- US-A1- 2006 183 821

## Description

### Technical Field

The present invention relates to a fire-proof wooden pressure board , falling within the technical field of artificial fiber board.

### Prior Art

Traditional artificial fiber boards are produced mainly by adding an adhesive to a woody fiber (wood-chips, etc.) used as major raw material, and conducting hot press process. The traditional artificial fiber boards are confronted with the following industrial problems. 1.The content of toxic harmful volatile substance such as formaldehyde etc. is high; 2.Combustion will occur upon ignition, and a large amount of dense smoke and toxic harmful substance will be released in the process of combustion, thus safety cannot be guaranteed; 3 .Expansion will occur upon exposure to water, and the strength of product will drop sharply, resulting in the inapplicability for outdoor environment; in the environment with high humidity, the product will absorb moisture, expand and deform very easily, affecting service life; 4.Screw-holding force is poor, leading to the drastic decrease of installability and usability of product; 5.Damp environment will make it easy to get mildewed and rotten.

A China patent of which the patent publication number is CN 105437327 B disclosed a preparation method of a low-formaldehyde medium/high density fiber board capable of resisting moisture and mildew. The preparation method comprises the steps of: (1) woodchipping: cutting twigs or three kinds of residue in forestry (i.e., logging residue, rough-hew residue and processing residue) into wood chips of uniform size via a woodchipper; (2) sifting: causing the wood chips of step (1) to go through a rocking sieve and conducting winnowing to reject off-specification wood chips and impurities; (3) pre-steaming: feeding the wood chips of step (2) into a pre-steaming silo, and feeding them into a mill; (4) thermo-refining: decomposing the wood chips pre-steamed under a high temperature of 165-175 °C and a high pressure of 0.8~0.9MPa into fibers via a defibrator; respectively adding 200~230 kg/m³ of urea-formaldehyde resin adhesive, 6~8kg/m³ of refined paraffin, 1.5~2kg/m³ of curing agent, and acid black 2 solution accounting for 1%~1.2% of absolutely dry fiber to the fibers in a wood-pulp spraying pipe; adding water to the acid black 2 in a dissolving tank and increasing temperature to 50~70 °C, with the mass ratio of water to acid black 2 in the acid black 2 solution being 4:1, and causing the solution to join the urea-formaldehyde resin adhesive via a screw pump and then adding the mixed solution into thermo-refining wood-pulp spraying pipe via a adhesive-applying pump; (5) drying: drying the thermo-refined fibers of step (4) in a drying pipe under the action of an air flow with the velocity of 30 m/s, and mixing them with the powder of active carbon, with the inlet temperature of drying pipe being 175°C or lower and outlet temperature being 50~70°C, keeping the moisture content of fiber at 8~10% via drying and mixing, with the powder of active carbon accounting for 1%~20% of absolutely dry fiber; (6) winnowing fibers: removing heavy fiber bundles, lumps of adhesive and other impurities in the fibers dried in step (5); (7) spreading and forming: under the condition of mechanical spreading, causing dry fibers to go through a rocking feeding trough, and uniformly spreading them over the whole width to form a plate blank; (8) heating plate blank: pre-pressing the plate blank spread and formed in step (7), and heating the fibers in advance via a pre-heating system before the pre-pressed plate blank enters a pressing machine; (9) hot pressing: causing the plate blank of step (8) to enter the pressing machine under the condition of being sandwiched between the steel-bands of a dual steel-band continuous pressing machine, and compressing the plate blank between an upper moving steel-band and a lower moving steel-band, and transmitting pressure to the plate blank via a pressing plate, a rolling rod and the steel-bands under the action of a hydraulic cylinder; (10) cross-cut sawing: using a dual diagonal saw to cut the plate blank after the continuous flat pressing of step (9) into a standard board with specified dimension according to requirements; (11) cooling: cooling the semi-finished product of fiber board in step (10) by a board overturning cooling machine so that the temperature of board core layer is lower than 60°C, and conducting a 48-hour curing to the overturned and cooled rough board; (12) sanding and saw-cutting: polishing the surface of the rough board cooled in step (11) by a sander, and cutting edges by a cutting saw.

JP2005042104A discloses a fire-proof wooden pressure plate comprising a wood powder material and an additive, the additive including a metallic oxide, a non-metallic oxide, a hydrochloride, a sulfate, a phosphate and a weak acid.

### Technical Problems

Thus, the complexity of carrying out the foregoing method can be known. Additionally, products obtained by this method need to be improved in terms of quality, especially flame retardancy and size stability after water absorption.

### Technical Solutions

To solve the foregoing problems, the present invention provides a fire-proof wooden pressure plate according to claim 1.

The fire-proof wooden pressure board provided by the present invention has the following advantages. With high density, high strength and strong screw-holding force, the pressure board can be sawn or planed, and will not expand after absorbing moisture, and can resist fire, and will not get rotten or mildewed, etc.

A fire-proof wooden pressure board is formed by conducting a cold pressing of 2~10 MPa to the uniformly mixed not less than 50 wt% of a wood powder material and an additive. The additive includes a metallic oxide, a non-metallic oxide, a hydrochloride, a sulfate, a phosphate, a weak acid and a strong acid.

In the technical solution of this disclosure, the metallic oxide is selected from calcium oxide, magnesium oxide, zinc oxide, aluminum oxide, etc. or their combination.

In the technical solution of this disclosure, the non-metallic oxide is selected from silicon dioxide, boron oxide, etc. or their combination.

In the technical solution of this invention, the hydrochloride is selected from sodium chloride, calcium chloride, magnesium chloride, aluminum chloride, or their combination.

In the technical solution of this disclosure, the sulfate is selected from sodium sulfate, calcium sulfate, aluminum sulfate, magnesium sulfate, etc. or their combination.

In the technical solution of this disclosure, the phosphate is selected from calcium phosphate, magnesium phosphate, zinc phosphate, aluminum phosphate, etc. or their combination.

In the technical solution of this disclosure, the weak acid is selected from acetic acid, oxalic acid, citric acid, maleic acid, phosphoric acid, carbonic acid, etc. or their combination.

In the technical solution of this disclosure, the strong acid is selected from hydrochloric acid, sulfuric acid, nitric acid, etc. or their combination. In line with the invention, in the additive, the pts.mass of each component are as follows:

| | |
|---|---|
| Metallic oxide | 10~20, |
| Non-metallic oxide | 5~10, |
| Hydrochloride | 1~2, |
| Sulfate | 1~2, |
| Phosphate | 1~2, |
| Weak acid | 5~10, |
| Strong acid | 5~10. |

As a preferred technical solution, the density of the fire-proof wooden pressure board is 0.8~1.6 g/cm³, and moisture content is 5~25 wt%, and expansion rate of water absorption of 24h is 5% or less, and static bending strength is 15~50 MPa, and internal bond strength is 0.5~8 MPa, and elastic modulus is 3000~12000, and screw-holding force of board surface is 650-2000N.

As a preferred embodiment, the fireproof rating of the fire-proof wooden pressure board is class A, and the amount of released formaldehyde reaches the standard of 'not detected', and mold resistance rating reaches class 0.

As a preferred technical solution, the thermal conductivity of the fire-proof wooden pressure board is 0.1~0.5 W/(mk).

Compared with the plate materials of prior art, the present board has remarkable characteristics.

### (1) Versus wood-plastic board

Mixed with a large amount of polymer component, a wood-plastic board has the characteristic of water-resistance and mold-resistance. However, its flame retardance rating is relatively low, so combustion will occur upon ignition, and toxic smoke will be generated, and screw-holding force is relatively poor, and aging resistance is poor. Besides, the content of polymer component is high, so texture is not good, and the product cannot replace solid wood. Additionally, warping and deforming will occur, and the product cannot be degraded.

### (2) Versus plywood

A plywood is also called assembled board, and is produced by conducting a hot pressing to layers of thin wood after the application of an adhesive. The thin wood of different layer may be different. The plate material has a texture of solid wood, but its flame retardance rating is also low, so combustion will occur upon ignition. Besides, cracking, expansion, warping, deforming, etc. will easily occur after water absorption. Additionally, the content of formaldehyde etc. is high, and the product is not environment-friendly.

### (3) Versus fiber board

In prior art, the plate material closest to the present invention is fiber board. A fiber board is also called density board, and is produced by applying an adhesive to a xylem fiber or other plant fibers used as raw material. The biggest problem of a fiber board is that it will absorb moisture easily, and the expansion degree after absorbing moisture is large, leading to the warping and deforming of plate material. Besides, its flame retardance rating is relatively low, so combustion will occur upon ignition. Additionally, the adhesive is not environment-friendly.

Thus it can be seen that plate materials mainly using wood will be confronted with technical problem in terms of size stability, flame retardance and environment-friendliness. The plate material of the present disclosure mainly comprises wood of which the content reaches 50 wt% or more, and it may be 70 wt%, and even 90 wt% or more is possible. Seen from water-absorption performance, expansion rate of water absorption of 24 hours is 5% or less, which shows a remarkable technical progress. Besides, in regard of other performance parameters, for instance, static bending strength is 15~50 MPa, and internal bond strength is 0.5~8 MPa, and elastic modulus is 3000~12000, and screw-holding force of board surface is 650~2000 N. In terms of comprehensive performance, the present board shows a remarkable progress compared with the plate material of prior art.

Another purpose, not in line with the claimed invention, is to provide a production method of the fire-proof wooden pressure board.

A production method of the fire-proof wooden pressure board, comprising the steps of:
a. keeping a fineness of raw material at 20~100 mesh, and mixing it uniformly;
b. laying boards;
c. conducting pressing under normal temperature, with a pressure kept at 2~10 MPa;
d. maintaining the pressure for 12~36 hours;
e. taking out plate material and balancing it under normal temperature for 3~10 days. In the technical solution of the present disclosure, the main raw material chosen in the production of plate material is lignocellulose which is an flocculent organic fibrous matter obtained via conducting a chemical treatment and a mechanical treatment to woods. The lignocellulose may be a cellulose powder produced by pulverizing woods from a fast-growing tree such as pine tree, cedar, etc., and the lignocellulose may also be a cellulose powder produced by pulverizing other raw material such as woods of mulberry, poplar, elm as well as the offcuts of various solid wood boards. The fineness only needs to be kept at 20~100 mesh. The moisture content of raw material required by the production is not high, because it can be adjusted in the process of production.

As a preferred technical solution, in step a, the raw material comprises a wood-chip powder and an additive, and specifically the additive is dispersed in water, and the liquid dispersion of the additive is used to wet the wood-chip, and uniformly-mixed material will be obtained after uniform wetting.

The additive includes a metallic oxide, a non-metallic oxide, a hydrochloride, a sulfate, a phosphate, a weak acid and a strong acid.

As a preferred technical solution, in step b, the paving thickness of each board is 2~15 cm, and pre-pressing thickness is 0.6~7.5 cm.

As a preferred technical solution, in step c, the object of pressing is a plate-mold assembly having a plurality of repeating units composed of a pre-pressed plate and semifinished product piled up by flat plate mold.

As a preferred technical solution, the height of the plate-mold assembly is 1~2 m, and the height after pressing is 0.8~1.2 m.

As a preferred technical solution, in step c, the plate-mold assembly will be locked by mold-locking assembly after being pressed to specified thickness, then it will move out from pressing machine and go to the step of maintaining pressure.

The step of pressing and the step of maintaining pressure are the most important step of the present disclosure.

Distinguished from prior art, the pressing of the present disclosure is cold pressing, and a pre-pressing will be conducted firstly, and then it will go to the stage of pressing with a pressing machine, and pressure value is set as 2~10 MPa. After pressing the plate-mold assembly to specified thickness, mold-locking will be conducted. Finally, a plate material will be formed after 12~36 h of pressure maintaining. In this process, a physicochemical reaction has occurred inside plate material. Such reaction is a slow exothermic reaction, and under such high pressure, materials will be further compressed so that the bound water inside lignocellulose will exude, and active material such as magnesium oxide, magnesium chloride, etc. will start hydration reaction to slowly form a hydraulic magnesium gel material and form a hydraulic silicate gel material. It is usually thought that some part of the heat released from reaction is heat of hydration while some part is heat of binding reaction or heat of cross-linking reaction.

### Advantageous Effects

To sum up, the present invention has the following advantageous effects:
(1) The product of this invention has a class A fire-proof function, becoming superior to traditional boards incapable of resisting fire;
(2) The product will not rot in water, and its mold resistance rating reaches class 0, solving such problems of traditional boards as 'incapable of resisting water', 'deforming and rotting in water', 'limited service life';
(3) The amount of detected formaldehyde is zero, and any other harmful volatile gas is not contained, thoroughly solving the industrial problem of traditional composite board that the contained formaldehyde will do harm to consumers;
(4) The product has a strong capability in terms of sound insulation and thermal insulation, solving the problem that the sound-insulation performance of traditional solid wood and composite boards is poor;
(5) The product has a relatively high performance in terms of adjusting humidity on its own, and as the humidity of outer environment changes, the board will absorb or release moisture automatically, serving a function of adjusting space humidity;
(6) The product uses xylem fiber as major raw material, thus its cost is low, and its sale price will greatly drop compared with solid wood boards, truly satisfying consumers' requirements via good quality and low price.
(7) The product has a wide range of application, and has made a breakthrough at the application scope of traditional boards on the basis of the characteristics of product itself, broadening the application field of product. The product is mainly used for: 1.wooden veneer, wooden door, furniture, kitchenware, etc.; 2.wooden wall partition, base course, ground foundation, suspended ceiling, etc.; 3.wooden flooring; 4.wooden fire-proof door, fire-proof wall, etc.; 5.wooden house, wooden bench, wooden bulletin board, wooden billboard, walkway paving, etc.; 6.wooden handicrafts, toys, etc..

### Brief Description of the Drawings

FIG.1 is a result table on the sound-insulation performance of the board;
FIG.2 is a result table on the combustion performance of the board;
FIG.3 is a result table on the bacteria resistance and the freezing and thawing resistance of the board;
FIG.4 is a result table on the density, moisture content, etc. of the board;
FIG.5 is a result table on the released formaldehyde of the board;
FIG.6 is a result table on the board surface screw-holding force of the board.

### Best Mode for Carrying Out manufacturing of the disclosed board

1. Material-mixing: 2480 KG of xylem fiber was weighed out, and the following additives were weighed out: 146 kg of magnesium oxide, 59 kg of magnesium chloride, 6 kg of silicon dioxide, 18 kg of calcium sulfate, 10 kg of calcium phosphate, 15 kg of acetic acid, and 20 kg of hydrochloric acid. The additives were dispersed in water to form a liquid dispersion with a certain concentration, then the uniformly-dispersed liquid dispersion was used to wet xylem fiber, and after uniform wetting, the uniformly-mixed material went into a material-spreading silo;
2. Material-spreading: The material-spreading thickness of each plate was 5 cm, and pre-pressing thickness was 2.2 cm, and weight was 45 kg~47 kg, and the number of spread plates was 65, and the plate pile-up height was 1.75 m~1.85 m;
3. Pressing: Pressing was conducted via a pressing machine, with a pressure of 4 Mpa;
4. Mold-locking: After the plate-mold assembly was pressed to specified thickness, mold-locking was conducted, then the mold-locking assembly moved out from the pressing machine and go to the step of maintaining pressure;
5. Pressure-maintaining: Mold-locking state was kept for 24 h;
6. Plate-separating: After reaction was completed, mold-unlocking and plate-separating was conducted;
7. Leaving plate in a still condition: The plate was placed in a semi-finished product storehouse for 7 days;
8. Rough edge-sawing: Due to roughness, each side of plate material was cut off by 1 cm via a saw;
9. Drying: The temperature of drying tunnel was kept at 90~100 °C, and drying time was 1.5 h, and the moisture content of needle-inserting method was 13%~15%.
10. Sanding: A 40-mesh sandpaper was used at the 1st sander holder, and a 80-mesh sandpaper was used at the 2nd sander holder, and a 120-mesh sandpaper was used at the 3rd sander holder, and a 180-mesh sandpaper was used at the 4th sander holder, and the required thickness of finished product is ±0.05 mm, and surface shall be smooth, and everywhere shall be rubbed by sandpaper;
11. Fine edge-sawing: The thickness at front-end and both sides of plate was smaller than normal range after sanding, and diagonal line difference is within ±3 mm.
12. Packing: Each plate was checked to see whether there is breakage, unrubbed part, etc., and packing was conducted in accordance with requirements.

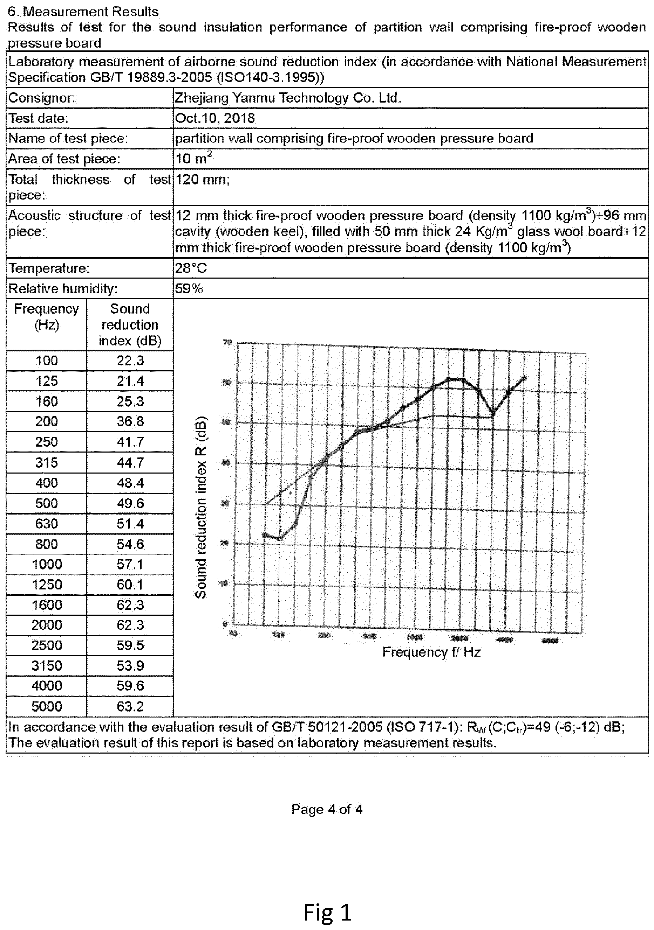

As shown in FIG.1-FIG.5, the plate material produced in this embodiment has good performance in many aspects.

Specifically, density is 1.1 g/cm³. Moisture content is 10~20 wt%. Expansion rate of water absorption of 24 h is 0. Internal bond strength is 0.77 MPa. Screw-holding force of board surface is 1140 N. Screw-holding force of board side is 1320 N. Breaking load is 760 N. In regard to bittern resistance, there is no water or damp. Thermal conductivity is 0.24 wW/(m·k). Released formaldehyde is 'not detected'. Calorific value is 1.1 MJ/kg. Mass loss rate of combustion is 39.8%.

### Embodiments , not in line with the claimed invention

### Embodiment 1

1. Material-mixing: 2000 KG of xylem fiber, 100 kg of magnesium oxide, 50 kg of magnesium chloride, 23 kg of calcium chloride, 16 kg of silicon dioxide, 10 kg of magnesium sulfate, and 18 kg of hydrochloric acid were weighed out, and the additives were dispersed in water to form a liquid dispersion with a certain concentration, then the uniformly-dispersed liquid dispersion was used to wet xylem fiber, and after uniform wetting, the uniformly-mixed material went into a material-spreading silo;
2. Material-spreading: The material-spreading thickness of each plate was 5 cm, and pre-pressing thickness was 2 cm, and weight was 40kg~42 kg, and the number of spread plates was 60, and the plate pile-up height was 1.65 m~1.75 m;
3. Pressing: Pressing was conducted via a pressing machine, with a pressure of 4 Mpa;
4. Mold-locking: After the plate-mold assembly was pressed to specified thickness, mold-locking was conducted, then the mold-locking assembly moved out from the pressing machine and go to the step of maintaining pressure;
5. Pressure-maintaining: Mold-locking state was kept for 36 h;
6. Plate-separating: After reaction was completed, mold-unlocking and plate-separating was conducted;
7. Leaving plate in a still condition: The plate was placed in a semi-finished product storehouse for 7 days;
8. Rough edge-sawing: Due to roughness, each side of plate material was cut off by 1 cm via a saw, and diagonal line difference is within ±3 mm;
9. Packing: Each plate was checked to see whether there is breakage, and packing was conducted in accordance with requirements.

In this embodiment, there is no need to conduct sanding treatment, so no need to conduct drying. The plate material of this embodiment has a certain degree of water-absorbing property and moisture-absorbing property, so the moisture content of plate material will be automatically adjusted by the plate material according to ambient environment. The plate material of this embodiment has a certain degree of water-absorbing property and moisture-absorbing property, but it will hardly expand after water absorption or dilution, and can still maintain a good size-stability and a good mechanical properties.

### Embodiment 2

1. Material-mixing: 2500 KG of xylem fiber, 165 kg of magnesium oxide, 68 kg of magnesium chloride, 12 kg of boron oxide, 16 kg of aluminum sulfate, 10 kg of magnesium phosphate, 10 kg of citric acid, and 15 kg of sulfuric acid were weighed out, and the additives were dispersed in water to form a liquid dispersion with a certain concentration, then the uniformly-dispersed liquid dispersion was used to wet xylem fiber, and after uniform wetting, the uniformly-mixed material went into a material-spreading silo;
2. Material-spreading: The material-spreading thickness of each plate was 10 cm, and pre-pressing thickness was 5 cm, and weight was 80kg~82 kg, and the number of spread plates was 30, and the plate pile-up height was 1.65 m~1.75 m;
3. Pressing: Pressing was conducted via a pressing machine, with a pressure of 6 Mpa;
4. Mold-locking: After the plate-mold assembly was pressed to specified thickness, mold-locking was conducted, then the mold-locking assembly moved out from the pressing machine and go to the step of maintaining pressure;
5. Pressure-maintaining: Mold-locking state was kept for 24 h;
6. Plate-separating: After reaction was completed, mold-unlocking and plate-separating was conducted;
7. Leaving plate in a still condition: The plate was placed in a semi-finished product storehouse for 7 days;
8. Rough edge-sawing: Due to roughness, each side of plate material was cut off by 1 cm via a saw;
9. Drying: The temperature of drying tunnel was kept at 90~100 °C, and drying time was 1.5 h, and the moisture content of needle-inserting method was 13%~15%.
10. Sanding: A 40-mesh sandpaper was used at the 1st sander holder, and a 80-mesh sandpaper was used at the 2nd sander holder, and a 120-mesh sandpaper was used at the 3rd sander holder, and a 180-mesh sandpaper was used at the 4th sander holder, and the required thickness of finished product is ±0.05 mm, and surface shall be smooth, and everywhere shall be rubbed by sandpaper;
11. Fine edge-sawing: The thickness at front-end and both sides of plate was smaller than normal range after sanding, and diagonal line difference is within ±3 mm.
12. Packing: Each plate was checked to see whether there is breakage, unrubbed part, etc., and packing was conducted in accordance with requirements.

### Performance test

From FIG.1, we can see that when frequency is 125 Hz, sound reduction index is 21.4 dB; when frequency is 250 Hz, sound reduction index is 41.7 dB; when frequency is 500 Hz, sound reduction index is 49.6 dB; when frequency is 1000 Hz, sound reduction index is 57.1 dB; when frequency is 2000 Hz, sound reduction index is 62.3 dB; when frequency is 4000 Hz, sound reduction index is 59.6 dB. The evaluation result according to GB/T 50121-2005 (ISO717-1) is: R_{w} (C; Cₜᵣ) =49 (-6; -12) dB.

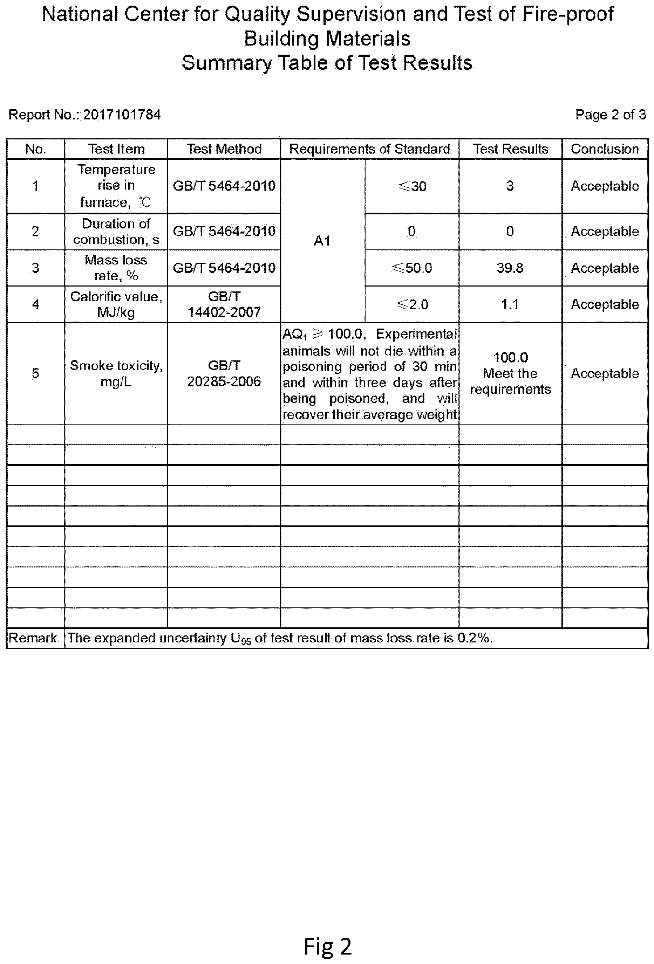

From FIG.2, we can see that duration of combustion of this product is 0, and mass loss rate is 39.8%, and calorific value is 1.1 MJ/kg, and smoke toxicity AQi=100, and experimental animals will not die within a poisoning period of 30 min and within three days after being poisoned, and will recover their average weight.

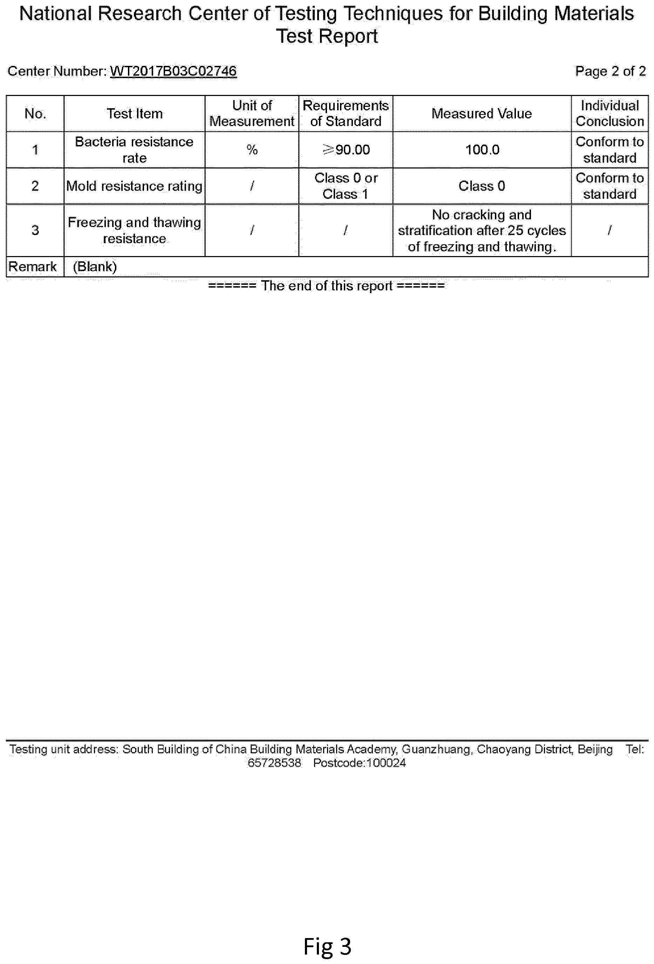

From FIG.3, we can see that the standard requirement of bacteria resistance rate is ≥90%, and this product is 100%; the standard requirement of mold resistance rating is class 0 or class 1, and this product is class 0; There is no requirement for the standard of freezing and thawing resistance, and the measured value of this product is 'no cracking and stratification after 25 cycles of freezing and thawing'.

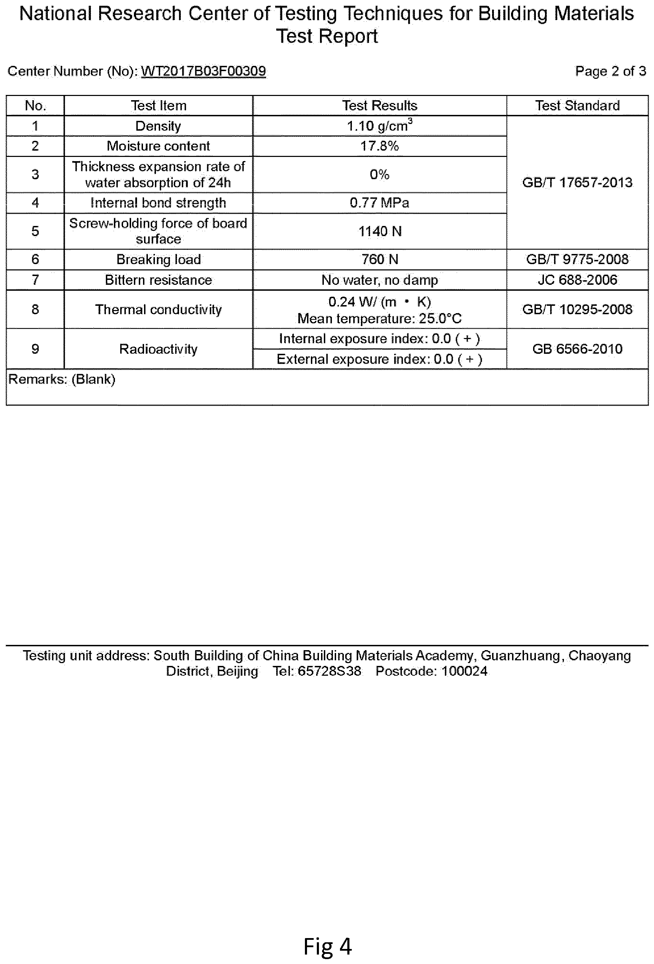

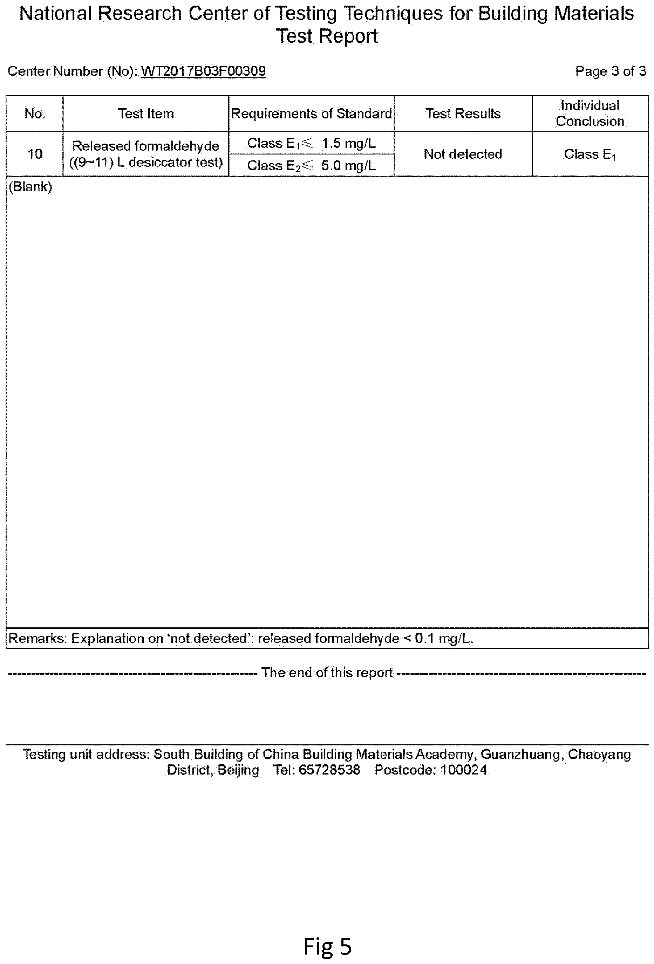

From FIG.4, we can see that the density of this product is 1.1 g/m³, moisture content is 17.8%, and thickness expansion rate of water absorption of 24h is 0%, internal bond strength is 0.77 MPa, and screw-holding force of board surface is 1140 N, and breaking load is 760 N, and bittern resistance is 'no water, no damp', and thermal conductivity is 0.24 W/(m·k), and internal exposure index is 0.0, and external exposure index is 0.0. From FIG.5, we can see that released formaldehyde is 'not detected'.

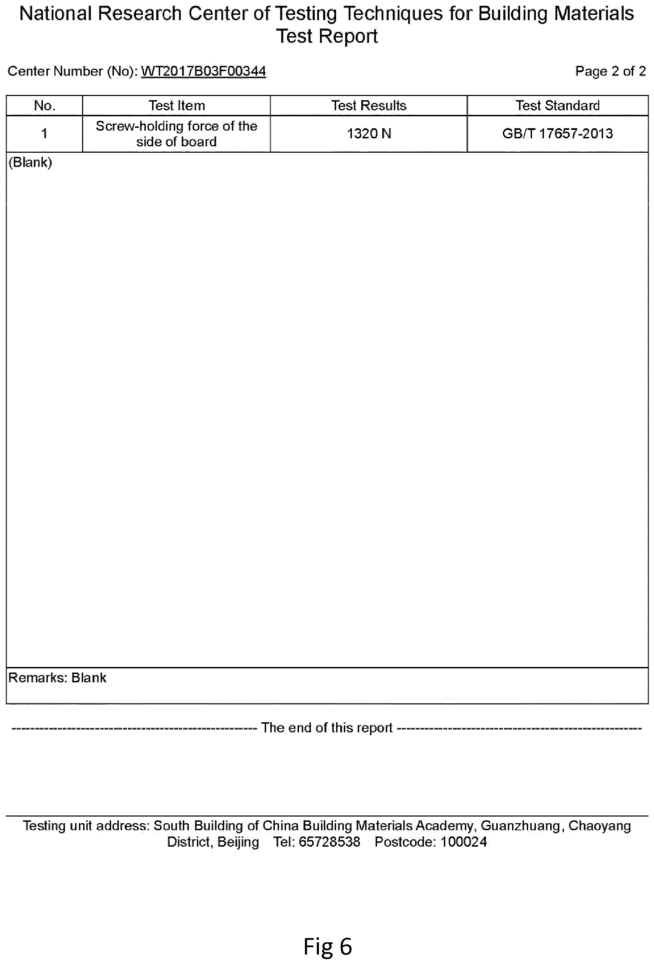

From FIG.6, we can see that screw-holding force of board side is 1320 N, test standard is GB/T 17657-2013.

Thus it can be seen that the product of this invention as defined in claim 1 2. has remarkable advantages compared with various plate materials of prior art.

## Claims

1. A fire-proof wooden pressure plate formed by conducting a cold pressing of 2~10 MPa to the uniformly mixed not less than 50 wt% of a wood powder material and an additive, the additive includes a metallic oxide, a non metallic oxide, a hydrochloride, a sulfate, a phosphate, a weak acid and a strong acid, wherein the hydrochloride is selected from sodium chloride, calcium chloride, magnesium chloride, aluminum chloride, or their combination ;
in the additive, the pts.mass of each component are as follows:
| | |
|---|---|
| Metallic oxide | 10~20, |
| Non-metallic oxide | 5~10, |
| Hydrochloride | 1~2, |
| Sulfate | 1~2, |
| Phosphate | 1~2, |
| Weak acid | 5~10, |
| Strong acid | 5~10. |

2. The fire-proof wooden pressure plate according to claim 1, **characterized in that** the fireproof rating of the fire-proof wooden pressure plate is class A, and the amount of released formaldehyde reaches the standard of 'not detected', and mold resistance rating reaches class 0.

## Patentansprüche

1. Feuerfeste hölzerne Druckplatte,
die durch Ausführen eines Kaltpressens von 2~10 MPa
an den gleichmäßig gemischten, nicht weniger als 50 Gew.-% eines Holzpulvermaterials und einem Additiv ausgebildet ist,
wobei das Additiv ein Metalloxid, ein nichtmetallisches Oxid, ein Hydrochlorid, ein Sulfat, ein Phosphat, eine schwache Säure und eine starke Säure beinhaltet,
wobei
das Hydrochlorid aus Natriumchlorid, Calciumchlorid, Magnesiumchlorid, Aluminiumchlorid oder deren Kombination ausgewählt ist;
im Additiv die Massenanteile jeder Komponente wie folgt sind:
| | |
|---|---|
| Metalloxid | 10~20, |
| Nichtmetallisches Oxid | 5~10, |
| Hydrochlorid | 1~2, |
| Sulfat | 1~2, |
| Phosphat | 1~2, |
| Schwache Säure | 5~10, |
| Starke Säure | 5~10. |

2. Feuerfeste hölzerne Druckplatte nach Anspruch 1, **dadurch gekennzeichnet, dass** die Feuerfestigkeitsbewertung der feuerfesten hölzernen Druckplatte Klasse A ist und die Menge an freigesetztem Formaldehyd den Standard "nicht nachgewiesen" erreicht und die Schimmelbeständigkeitsbewertung Klasse 0 erreicht.

## Revendications

1. Plaque de pression en bois ignifugée
formée en réalisant un pressage à froid
de 2~10 MPa
sur le mélange uniforme d'au moins 50 % en poids d'un matériau de poudre de bois et d'un additif, l'additif comprend un oxyde métallique, un oxyde non métallique, un chlorhydrate, un sulfate, un phosphate, un acide faible et un acide fort,
ledit chlorhydrate étant choisi parmi le chlorure de sodium, le chlorure de calcium, le chlorure de magnésium, le chlorure d'aluminium ou leur combinaison ;
dans l'additif, les parties en masse de chaque composant sont les suivants :
| | |
|---|---|
| Oxyde métallique | 10~20; |
| Oxyde non métallique | 5 ~ 10 ; |
| Chlorhydrate | 1 - 2 ; |
| Sulfate | 1 ~ 2; |
| Phosphate | 1 - 2 ; |
| Acide faible | 5 ~ 10; |
| Acide fort | 5~10. |

2. Plaque de pression en bois ignifugée selon la revendication 1, **caractérisée en ce que** l'indice d'ignifugation de la plaque de pression en bois ignifugée est de classe A, et la quantité de formaldéhyde libéré atteint la norme de 'non détectée', et l'indice de résistance à la moisissure atteint une classe 0.
